# EUROPEAN PATENT SPECIFICATION

(11) **EP 3 264 958 B1**
(45) Date of publication and mention of the grant of the patent: **18.11.2020**
(21) Application number: 16709534.8
(22) Date of filing: 04.03.2016
(51) Int. Cl.: A47K 11/10, E03D 9/00, E03D 9/03

(54) **TOILET SANITATION AID**
TOILETTENSANIERUNGSHILFE
ACCESSOIRE DE DÉSINFECTION DE TOILETTES

(30) Priority: 04.03.2015 GB 201503661
(43) Date of publication of application: 10.01.2018
(73) Proprietor: Imperial Great British Design Limited, Leicester, Leicestershire LE8 6BB (GB)
(72) Inventor: BHAM, Muhammad, Leicester Leicestershire LE8 6BB (GB)
(74) Representative: Adamson Jones
(86) International application number: PCT/GB2016/050585
(87) International publication number: WO 2016/139493

(56) References cited:
- FR-A1- 2 647 483
- JP-A- H08 239 886
- US-A1- 2008 135 062

## Description

The present disclosure relates to the field of sanitation, and in particular to a sanitation device for use in a toilet. The present invention relates to a toilet sanitation aid.

Toilet bowls are known to harbour a wide variety of potentially harmful bacteria, and as such require regular cleaning in order to reduce the risk of contamination for a user. Document FR 2 647 483 A1 discloses a toilet sanitation aid comprising a housing with an enclosure for a cleaning product and a handle connector portion, an intermediate limb between a handle connector portion and the housing being shaped to pass over a rim of a toilet bowl in a first usage condition such that the cleaning product is held within a region of flow of water of a toilet bowl in the first usage condition and acts to chemically cleanse the toilet bowl, wherein the housing comprises a cleaning formation, and the aid comprises a handle connector portion arranged to allow selective actuation of the housing for abrasive cleaning of the toilet bowl using the cleaning formation in a second usage condition.

Furthermore, without regular cleaning of the bowl of a toilet, unsightly deposits and unpleasant odours can accumulate, resulting in an unpleasant experience for a user.

A conventional method for cleaning a toilet bowl involves simply scrubbing the bowl with a so-called toilet-brush. However, the bristles of a conventional toilet brush are particularly prone to trapping matter therein during cleaning, which can contaminate the toilet brush. Furthermore, toilet brushes are often stored as part of a separate stand-alone unit, and as such there is a risk of cross-contamination between the toilet bowl and the storage unit. Alternative methods for cleaning toilets include placing a chemical "tablet" in either the water tank of the toilet, or housing a chemical "tablet" within a dispenser, and placing the dispenser under the rim of a toilet bowl. The first of these methods often relies on steady dispensation of the chemical over a period of weeks or more, and therefore can result in small doses being released with each flush of the toilet, which are inadequate to remove deposits within the toilet bowl. Furthermore, any chemical placed within the tank of a toilet has to be safe and compatible with the mechanisms contained within the tank, and this may thus restrict the form of chemical that may be used.

Whilst placing a chemical "tablet" within a dispenser offers a wider range of choice of chemical, it may nevertheless result in a much smaller field of distribution of the chemical, due to the fixed position of the dispenser relative to the flow of water when the toilet is flushed, with the cleaning product usually only being effectively dispersed within close proximity of the dispenser in which the chemical is held. Each of these alternative methods may therefore result in inadequate cleaning of a toilet bowl. Due to the health implications of poor toilet hygiene, there is a clear desire for appropriate cleaning and/or sterilization of a toilet, such there is a minimal health risk presented to the user of the toilet.

There has now been devised an improved toilet sanitation aid which overcomes or substantially mitigates the aforementioned and/or other disadvantages associated with the prior art.

According to the invention there is provided a toilet sanitation aid comprising at least the features of claim 1, the aid comprising a housing for a cleaning product, the housing adapted to be removably supported on a toilet bowl in a first usage condition, wherein the housing comprises a cleaning formation, and the aid comprises a handle connector portion arranged to allow selective actuation of the housing for cleaning the toilet bowl using the cleaning formation in a second usage condition.

The toilet sanitation aid of the present invention is advantageous in that it provides a first usage condition during which a cleaning product may act to chemically cleanse a toilet bowl, and a second usage condition in which a cleaning formation is used to mechanically/abrasively remove material, resulting in effective cleaning of a toilet bowl. A handle may be actuable relative to the housing, e.g. via the connector portion. The handle may be pivotably or rotatably actuable relative to the housing. The handle may be rotated for example approximately 180° between the first and second usage conditions.

The handle may be selectively actuable relative to the housing. A releasable latch or lock may be provided for the handle. Corresponding latching or locking formations may be provided on the handle and an adjacent portion of the housing to allow the handle to be releasably held in the first and/or second condition.

The handle may be removably actuable relative to the housing.

The handle may be permanently attached or integrally formed with the housing, for example as a handle portion of the housing. Alternatively the handle may be selectively mountable to the housing. The handle may be mounted to the housing via a push-fit, snap-fit, screw-fit, or any other appropriate engagement mechanism.

The handle may comprise a formation for engaging a corresponding formation of the housing, i.e. the connector portion. The handle may comprise a formation for releasably engaging a corresponding formation of the housing. The handle portion may comprise a projection or recess for releasably engaging a corresponding recess or projection of the housing.

The housing may be a flexible and/or a deformable material. The housing may be comprise a resiliently deformable material. The handle may comprise or consist of a more rigid material than the deformable housing material.

The housing and/or cleaning formation may be formed of a polymer, e.g. a resiliently deformable material, such as an elastomer or rubber.

The connector portion of the housing may be shaped to allow relative motion between the housing and the handle portion. The connector portion may releasably fix the handle in the first and/or second usage conditions.

The housing may comprise a support portion for engagement with the toilet bowl. The support portion may comprise a limb.

The limb may be shaped to be removably supported on a toilet bowl. The limb may be shaped so as to substantially conform to the shape of a rim of a toilet bowl. The limb may be adjustable to conform to toilet bowls of varying widths. The limb may comprise a ratchet mechanism, which may be used to alter the length of the limb. The limb may define a hook-like portion. The limb may be generally S-shaped. The hook-like portion may be flexible, for example to grip the toilet bowl rim in use.

The housing may be removably supported on a toilet bowl via the action of gravity. The housing may be removably supported on a toilet bowl via a frictional engagement, i.e. via a push-fit or the like. The support portion may hook onto and/or grip the toilet bowl in the first usage condition.

The housing may be shaped such that a cleaning product is held within a region of flow of water of a toilet bowl in the first usage condition.

The housing comprises an enclosure for the cleaning product, such as a complete or partial enclosure, which may be held by the support portion, for example to expose a cleaning product to an internal environment of a toilet bowl. The enclosure may comprise a plurality of apertures. Thus the enclosure may define a cage-like or basket structure in which a cleaning product is retained.

The handle may depend from and/or be mounted to the support portion of the housing. In the second usage condition, the handle may extend from the support portion in a direction away from the enclosure.

The cleaning formation is disposed on an external surface of the enclosure of the housing. The cleaning formation may be integrally formed with the enclosure thereof. The cleaning formation may be detachable from a remainder of the enclosure of the housing. The cleaning portion/formation is preferably remote from the handle connector.

A wall of the enclosure which sits adjacent or facing the interior of the toilet bowl in use, e.g. a rear wall of the enclosure, may comprise one or more opening to allow flushing of the cleaning product when supported on the toilet bowl in the first usage condition. Such opening(s) may comprise one or more slot, slit or mouth. An angled wall portion in the vicinity of the opening(s) may direct liquid into the enclosure.

The enclosure may comprise an engagement formation for releasably engaging a corresponding engagement formation of the support portion. The engagement formation may be a male or female connecting formation. The enclosure may comprise a projection or recess for releasably engaging a corresponding recess or projection of the support portion. Thus the enclosure may be releasably engaged with the housing, e.g. the support portion thereof, via a friction fit, a push-fit, or snap-fit, or the like.

The enclosure may be open, such that it engages with the support portion to form a substantially enclosed region for the cleaning product. The enclosure may be substantially dome-shaped.

The cleaning formation takes the form of upstanding projections. The cleaning formation takes the form of upstanding ridges.

The cleaning formation comprises a plurality of upstanding projections. The plurality of projections may be elongate in form, and may extend over the surface of the housing. The plurality of projections may be aligned substantially in parallel. The projections may be spaced by apertures, which may be elongate in form. The plurality of cleaning formations may be annular ridges.

The plurality of cleaning formations may extend across substantially the entirety of the enclosure.

The cleaning formation and/or enclosure may be formed of a different material to the remainder of the housing.

The cleaning formation may be resiliently deformable and may be formed of a less rigid material than the remainder of the housing. The cleaning formation may have a higher coefficient of friction than a remainder of the housing. An outer surface of the cleaning formation may be relatively rough, or porous, so as to provide the cleaning formation with an abrasive nature.

The apertures of the enclosure may be provided between the cleaning formations. Thus the toilet sanitation aid may provide chemical sanitation whilst the aid is used for scrubbing in its second usage condition, by allowing entry and exit of water into the enclosure between the cleaning formations.

The cleaning product may comprise a solid body, such as a block, tablet or the like. The cleaning product may be shaped to correspond to an internal space of the housing/enclosure. The enclosure may comprise an internal projection and the cleaning product may comprise a corresponding recess arranged to be aligned with the projection.

A practicable embodiment of the invention is described in further detail below with reference to the accompanying drawings, of which:
Figure 1 is an exploded perspective view of a first embodiment of a toilet sanitation aid according to the present invention, in its second usage condition;
Figure 2 is a sectional view of a central vertical plane through the toilet sanitation aid of Figure 1 in its first usage condition;
Figure 3 is a perspective view of the toilet sanitation aid of Figure 1 in use in its second usage condition;
Figure 4 is a perspective view of the toilet sanitation aid of Figure 1 illustrating the transition of the aid between a first usage condition and a second usage condition;
Figure 5 is an exploded perspective view of a second embodiment of a toilet sanitation aid according to the present invention, in its second usage condition;
Figure 6 is a sectional view of a vertical plane through the toilet sanitation aid of Figure 5 in its first usage condition;
Figure 7 is an exploded perspective view of a third embodiment of a toilet sanitation aid according to the present invention, in its second usage condition;
Figure 8 is a sectional view of a central vertical plane through the toilet sanitation aid of Figure 7 in its first usage condition;
Figure 9 is a perspective view of the toilet sanitation aid of Figure 7 in use in its second usage condition;
Figure 10 is an exploded perspective view of a further example of a toilet sanitation aid according to the invention, having a latch;
Figure 11 is an exploded perspective view of a further example of a toilet sanitation aid according to the invention, having a latch.

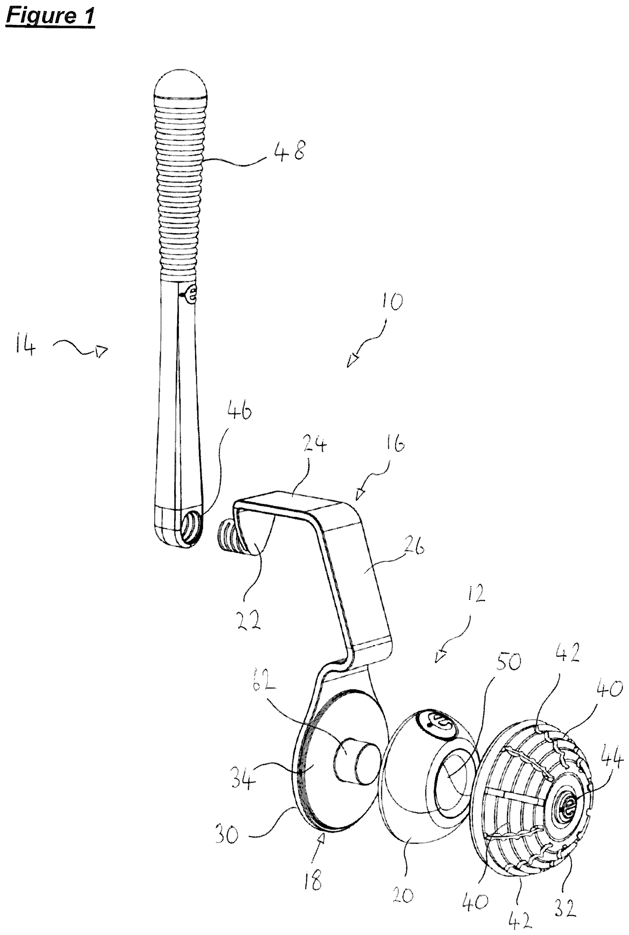

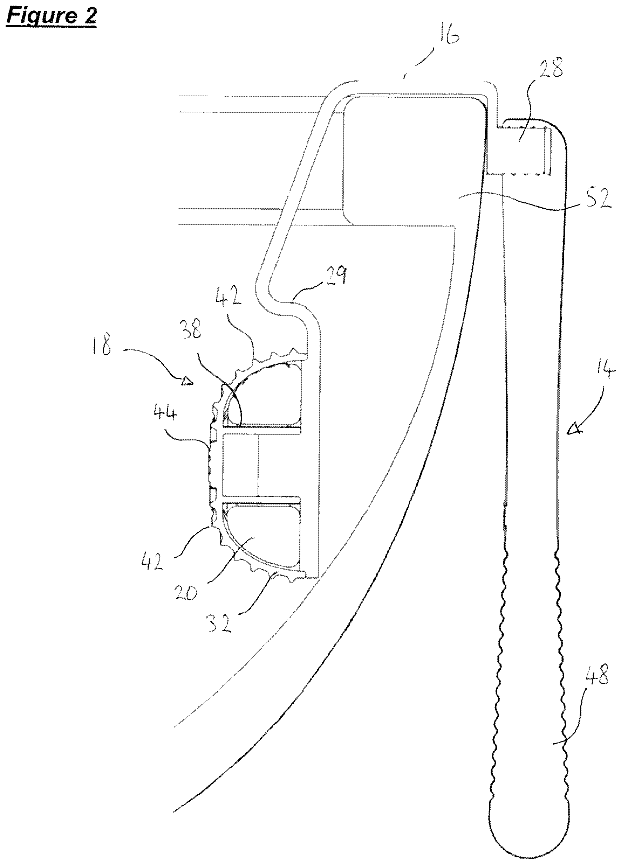

A first embodiment of a toilet sanitation aid, generally designated 10, according to the present invention is shown in Figures 1 and 2. The toilet sanitation aid 10 comprises a housing 12, and a handle portion 14.

The housing 12 comprises a retaining formation 16 for releasably engaging a lip of a toilet bowl, and a receiving portion 18 for releasably receiving a cleaning product 20.

The retaining formation 16 comprises first 22, second 24, and third 26 limbs, which are integrally formed so as to provide a common limb-like support formation. The first limb 22 is substantially triangular in form, yet has one substantially curved vertex. A handle retaining formation 28 extends laterally outwardly from a first surface of the first limb 22.

The handle retaining formation 28 is substantially cylindrical in form, and takes the form of a male projection. The handle retaining formation 28 is dimensioned so as to engage a corresponding recess 46 of the handle portion 14. An outer surface of the handle retaining formation 28 has a threaded portion for engaging a corresponding threaded portion of the recess 46. The handle retaining formation 28 is integrally formed with the first limb 22.

The first limb 22 is disposed substantially perpendicularly to the second limb 24, such that the first limb 22 depends substantially downwardly from a first end of the second limb 24. The second limb 24 is substantially planar in form, and is shaped so as to correspond substantially to an upper surface of a lip of a toilet bowl.

The third limb 26 depends substantially downwardly from a second end of the second limb 24, in a region of a proximal end of the third limb 26. Thus the second limb 24 extends between, and connects, the first 22 and third 26 limbs. The third limb 26 is not disposed perpendicularly to the second limb 24, and is instead angled obliquely relative to the perpendicular axis. The third limb 26 is substantially planar in form, and is elongate such that it may extend substantially into a toilet bowl in a first usage condition.

Thus the retaining formation 16 has a substantially hook-like form, and may be releasably hooked over the lip of a toilet bowl.

The receiving portion 18 comprises a main body 30 and an enclosure 32, herein referred to as a cover. The main body 30 is integrally formed with, and depends substantially vertically downwardly from, a distal end of the third limb 26. The interface 29 between the main body 30 and the third limb 26 is substantially S-shaped, so as to allow for flexibility and relative motion of the main body 30 relative to the third limb 26. The main body 30 is substantially circular in form, and comprises a raised portion 34. The upraised portion 34 is substantially circular in form, and has a diameter that is slightly less than the diameter of the main body 30. A peripheral rim of the upraised portion 34 is lightly tapered, and comprises a plurality of annular formations for engaging corresponding annular formations of an internal surface of the cover 32.

The main body 30 further comprises a retaining hub 36 for releasably receiving a guiding formation 38 of the cover 32. The retaining hub 36 is substantially cylindrical in form, and extends substantially laterally outwardly from the centre of the upraised portion 34. Thus the retaining hub 36 takes the form of a male projection for receiving a corresponding female formation 38 of the cover 32. The retaining hub 36 has a significantly smaller diameter than that of the upraised portion 34.

The cover comprises a resiliently deformable material which is preferably softer than the material of the receiving portion 18. The cover may be entirely formed of the resiliently deformable material or else may comprise a more rigid underlying structure to the surface of which the resiliently deformable material is applied. The resiliently deformable material may be an elastomer, rubber or the like, whereas the receiving portion 18 may be formed of a conventional, rigid polymer.

The cover 32 is substantially hemispherical in form, such that the cover 32 is substantially dome-shaped. The cover 32 is substantially hollow, such that it may house a cleaning product 20 in use. The largest diameter of the cover 32 is substantially the same as that of the upraised portion 34. An internal surface of the rim of the cover comprises a plurality of annular formations for engaging the corresponding annular formations of the peripheral rim of the upraised portion 34.

The internal surface of the cover 32 further comprises a guiding formation 38 for locating the cover 32 relative to the main body 30. The guiding formation 38 is integrally formed with, and extends laterally inwardly from, the inner surface of the cover 32. The guiding formation 38 takes the form of a substantially hollow cylinder, having a diameter that substantially corresponds to the diameter of the hub 36. Thus the guiding formation 38 may be releasably received upon the hub 36 with a friction fit. The guiding formation 38 has a depth that substantially corresponds to the depth of the cover 32, such that the rim of the cover 32 may directly engage the main body 30 when the aid 10 is assembled.

An outer surface of the cover 32 is truncated, such that the apex of the substantially dome-shaped cover 32 is substantially planar. The outer surface of the cover 32 comprises a plurality of apertures 40 for exposing a cleaning product held within the cover 32 to an external environment, and a plurality of annular ridges 42 that act as cleaning formations.

Each of the plurality of apertures 40 is substantially elongate in form, and is substantially linear, such that each of the plurality of apertures is substantially rectangular in shape. Each of the plurality of apertures 40 extends transversely across the curved surface of the cover 32, from a region of the rim of the cover 32 to the border of the truncated apex of the cover 32. Each of the plurality of apertures 40 is spaced equidistantly from an adjacent aperture 40, such that the plurality of apertures 40 are disposed upon the outer surface of the cover 32 in a regular array. The apertures may be generally radially arranged with respect to the centre of the dome.

Thus the cover 32 may define a cage-like structure.

Each of the plurality of annular ridges 42 extends annularly around substantially the entirety of the cover 32, such that each of the plurality of annular ridges 42 extends substantially perpendicularly to each of the plurality of apertures 40. The plurality of annular ridges 42 are disposed upon the outer surface of the cover 32 such that they extend from a region of the rim of the cover 32 to the border of the truncated apex of the cover 32. Each of the plurality of annular ridges 42 is spaced equidistantly from an adjacent annular ridge, such that the plurality of annular ridges 42 are disposed upon the outer surface of the cover in a regular array.

The outer surface of the cover 32 further comprises a plurality of circular ridges 44 that are upstanding from the substantially planar surface at the apex of the cover 32.

Thus the plurality of annular ridges 42 and the plurality of circular ridges 44 define an abrasive formation capable of cleaning the bowl of a toilet.

The handle portion 14 is substantially elongate in form. A proximal end of the handle portion 14 comprises a recess 46 for receiving the handle retaining portion 28. The recess 46 has a substantially circular cross section, and extends across substantially the entirety of the width of the handle portion 14. The diameter of the recess 46 corresponds substantially to the diameter of the handle retaining portion 28. An internal surface of the recess 46 comprises a threaded portion for engaging a corresponding threaded portion of the handle retaining portion 28.

A distal end of the handle portion 14 comprises a grip formation 48. The grip formation 48 takes the form of a plurality of circumferential projections that are disposed such that they resemble a concertina-like arrangement. The grip formation 48 is displaced slightly from the distal end of the handle portion 14, and extends across substantially one third of the length of the handle portion 14.

In other embodiments, the grip formation could comprise a friction promoting material, such as a material similar to that used for the cleaning formations 42.

A cleaning product 20 for use with the first embodiment of the toilet sanitation aid 10 according to the present invention is shown most clearly in Figure 1. The cleaning product 20 has substantially the same shape as the interior of the cover 32, the boundary of which is defined by the rim of the cover 32 and the outer surface of the guiding formation 38. Thus the cleaning product 20 has a somewhat toroidal form, with a central through-hole 50 in this example.

In other examples, the cleaning product may be alternatively shaped to correspond to the shape of the enclosure/cover so as to be a generally close fit therewith.

In various embodiments of the invention, the cleaning product is shaped to positively engage with a retaining formation on the receiving formation 18 and/or cover 32. This differs from more conventional cleaning tablet holders in which the cleaning products are loosely held in a simple, oversized enclosure. The positive engagement between the cleaning product and enclosure according to embodiments of the invention is beneficial in that it firmly holds the cleaning product and may reduce the likelihood of breakup of the cleaning product during agitation when cleaning a toilet bowl.

The cleaning product 20 is typically formed of a powder/particulate sanitary material that is pressed or otherwise bound into a predetermined, generally solid body. The body is relatively porous to allow the body to slowly dissolve or fragment into particulate form in flowing water. The body may be referred to as a tablet and may be formed by conventional methods and materials, albeit to define a novel shape for engagement with the enclosure in the manner described above.

In order to assemble the toilet sanitation aid 10, the cleaning product 20 is placed within the cover 32, such that the guiding formation 38 is located within the through-hole 50. The guiding formation 38 is substantially aligned with the hub 36 of the main body 30, and the cover and the main body are then brought into engagement via a push-fit arrangement. The plurality of annular formations of the rim of the cover 32 further engage the plurality of annular formations of the upraised portion 34, in order to form a secure connection. The recess 46 of the handle portion is aligned with the handle retaining formation 28 of the first limb 22, such that the handle portion 14 may be brought into releasable engagement with the housing 12 via a screw fit.

A first usage condition of the first embodiment of the toilet sanitation aid 10 according to the present invention is shown in Figure 2. In the first usage condition, the handle portion 14 is oriented downwardly, such that the handle portion 14 and the main body 30 lie in a substantially parallel direction. The retaining formation 16 is located over the rim 52 of a toilet bowl, such that the retaining formation 16 acts to hold the toilet sanitation aid 10 on the rim 52 of the toilet bowl. The retaining formation 16 is flexible such that it can grip the rim 52. The engagement between the rim 52 and the retaining formation 16 is such that the sanitation aid 10 is slidably mounted along the rim.

The receiving portion 18 holding the cleaning product 20 is held by the retaining formation 16 such that it is in a direct flow path of water that is released when the toilet is flushed, e.g. beneath the rim. When the toilet is flushed water contacts the cleaning product 20 via the plurality of apertures 40 located on the cover 32. A small portion of the cleaning product 20 is dissolved within the flow of water, and thereby acts to facilitate the cleaning of the toilet bowl. Once the cleaning product 20 has run out, the cover 32 can be manually removed, and a new cleaning product may be inserted.

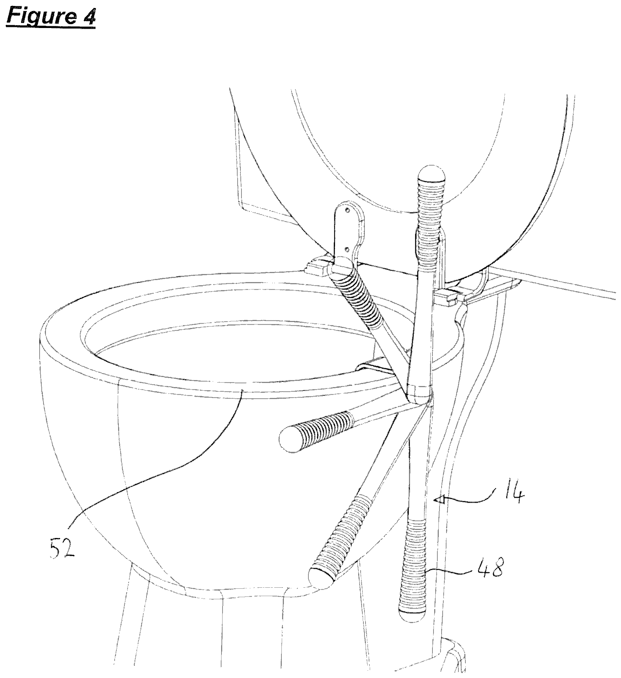

The handle portion 14 is rotatably moved about the handle retaining formation 28 in order to bring the toilet sanitation aid into its second usage condition, as shown in Figure 4.

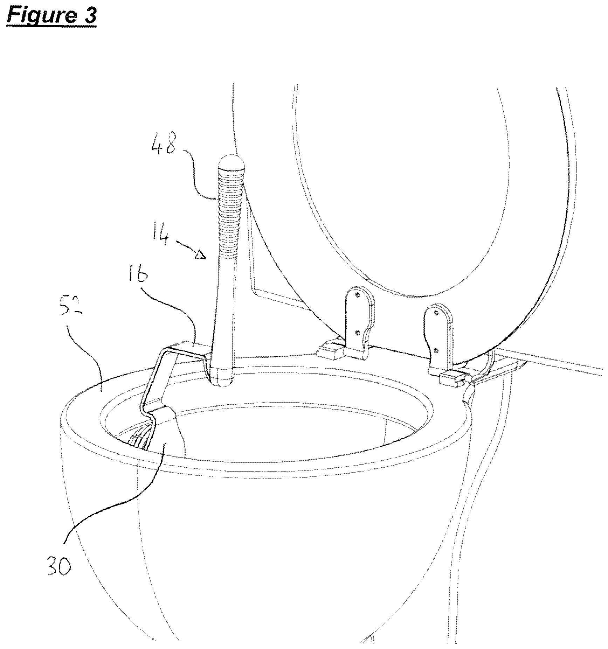

A second usage condition of the first embodiment of the toilet sanitation aid 10 according to the present invention is shown in Figure 3. In the second usage condition, the handle portion 14 is oriented upwardly, such that the handle portion 14 and the main body 30 lie in a substantially parallel direction, but extend in opposing directions. A user is able to grasp the grip formation 48 of the handle portion 14, lift the sanitation aid 10 off the toilet rim and the abrasive cleaning formation formed by the plurality of annular ridges 42 and the plurality of circular ridges 44 may then be used to scrape the side surfaces of the interior of the toilet bowl. The aid 10 can thus be used in a manner similar to a conventional cleaning brush. Whilst the aid 10 is in use, the cleaning product 20 may provide additional cleaning power via the apertures 40.

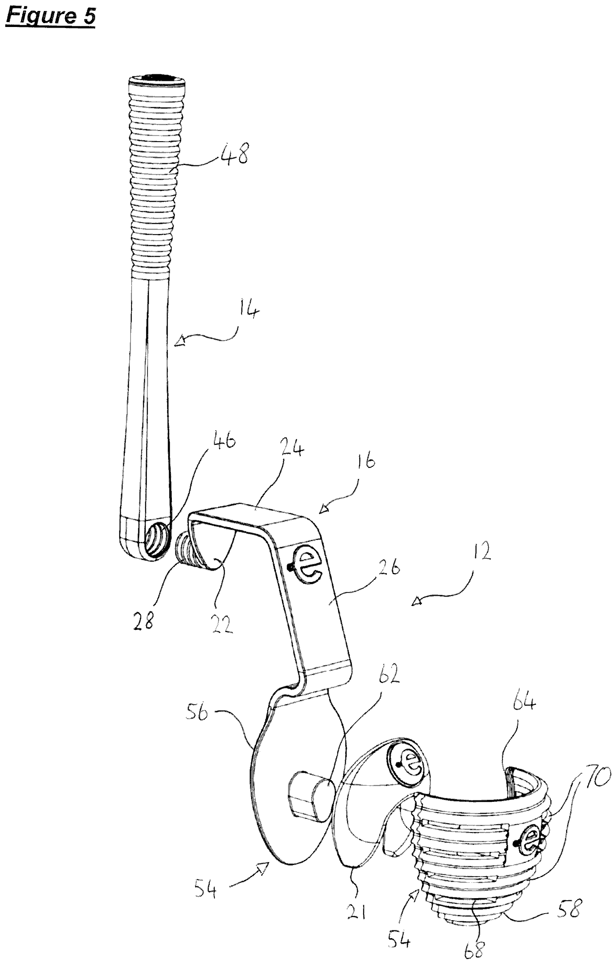

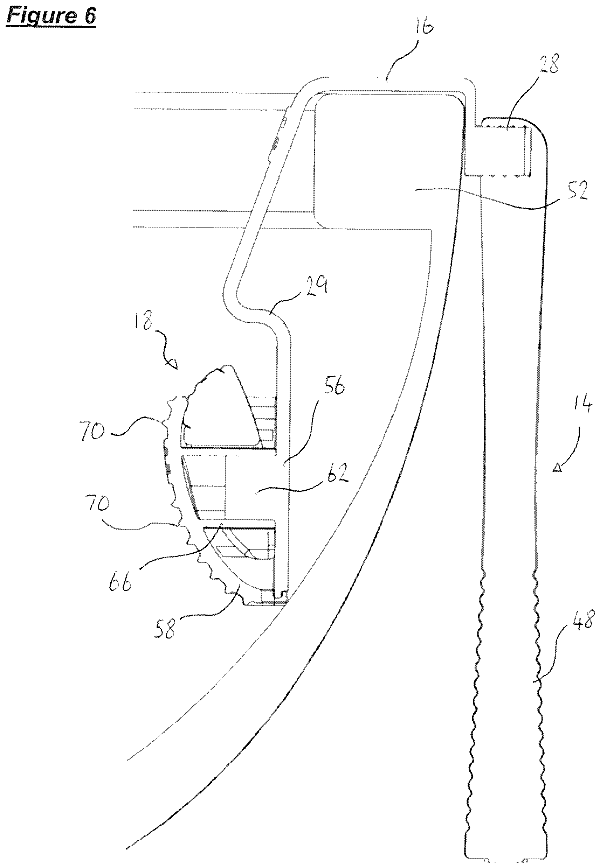

A second embodiment of the toilet sanitation aid 10 according to the present invention is shown in Figures 5 and 6. The second embodiment differs from the first embodiment only in the form of the receiving portion 54 of the housing 12.

The receiving portion 54 comprises a main body 56 and a cover 58. The main body 56 is integrally formed with, and depends substantially vertically downwardly from, a distal end of the third limb 26. The interface 29 between the main body 56 and the third limb 26 is substantially S-shaped, so as to allow for flexibility and relative motion of the main body 56 relative to the third limb 26.

The main body 56 is substantially elliptical in form, and comprises a lip 60 for engaging a corresponding channel 64 of the cover 58. The lip 60 has a substantially square cross-section, and extends about substantially the entirety of the perimeter of the main body 56.

The main body 56 further comprises a retaining hub 62 for engaging a corresponding guiding formation 66 of the cover 58. The retaining hub 62 takes the form of a protrusion, which may have a substantially tear-drop or circular shape in plan, and extends substantially perpendicularly outwardly from the main body 56. Thus the retaining hub 62 takes the form of a male projection for engaging a corresponding female formation of the cover 58. The retaining hub 62 is located slightly off-centre of the main body 56 along a semi-major axis of the main body 56, such that the retaining hub 56 is located in a lower half of the main body 56.

The cover 58 takes the form of a hollow quadrant of an ellipsoid, with an outer surface of the cover 58 defining a curved enclosure. An upper region of the cover 58 is open, such that it may receive a cleaning product 21 in use.

An internal surface of the rim of the cover 58 comprises a channel 64 for receiving the corresponding lip 60 of the main body 56. The channel 64 extends along substantially the entirety of the rim.

The internal surface of the cover 58 further comprises a guiding formation 66 for locating the cover 58 relative to the main body 56. The guiding formation 66 is integrally formed with, and extends laterally inwardly from, the inner surface of the cover 58. The guiding formation is substantially hollow, and has substantially the same shape and dimensions as those of the hub 62. Thus the guiding formation 66 may be received upon the hub 62 with a friction or push fit. The depth of the guiding formation 66 is such that the rim of the cover 58 directly engages the main body 56 when the aid 10 is assembled.

An outer surface of the cover 58 comprises a plurality of apertures 68 for exposing a cleaning product 21 held within the cover 58 to an external environment, and a plurality of upstanding ridges 70 that act as a cleaning formation.

Each of the plurality of apertures 68 is substantially elongate in form, and is substantially linear, such that each of the plurality of apertures 68 is substantially rectangularly shaped. Each of the plurality of apertures 68 extends transversely across the curved surface of the cover 58, from a region of the rim of the cover 58 to a central region of the curved surface. The plurality of apertures are disposed in a plurality of arrays, with a single array being located either side of the central region of the curved surface of the cover 58. Each aperture 68 in an array is spaced equidistantly from an adjacent aperture 68 in the array, such that each array of apertures 68 is a regular array.

Thus the cover 58 may define a cage-like structure having an opening for insertion of a cleaning product 21.

Each of the plurality of upstanding ridges 70 extends substantially transversely across the curved surface of the cover 58, such that the plurality of upstanding ridges 70 extend in a direction that is substantially parallel to the plurality of apertures 68. Each of the plurality of upstanding ridges 70 is spaced equidistantly from an adjacent upstanding ridge, such that the plurality of upstanding ridges 70 are disposed upon the outer surface of the cover in a regular array.

Thus the plurality of upstanding ridges 70 define an abrasive formation capable of cleaning the bowl of a toilet.

A cleaning product 21 for use with the second embodiment of the toilet sanitation aid 10 according to the present invention is shown most clearly in Figure 5. The cleaning product 21 has substantially the same shape as the interior of the cover 58, the boundary of which is defined by the rim of the cover 58 and the outer surface of the guiding formation 66. Thus the cleaning product 20 has a somewhat horse-shoe shaped form, allowing the cleaning product 21 to be placed upon the guiding formation 66 via an opening or open end of the cover.

The second embodiment of the toilet sanitation aid 10 according to the present invention is assembled in much the same way as the first embodiment, with the only difference being that the cleaning product 21 is inserted into the cover 58 once the cover 58 has been attached to the main body 56, via the opening present in the top of the cover 58. Such a configuration may allow for removal and/or replacement of the cleaning product 21, without requiring disassembly of the toilet sanitation aid 10. Thus a user need not handle the aid 10 to replace the cleaning product.

The above examples of the invention make use of a handle that can be rotated on a screw thread to tighten the fit between the handle and housing. This allows the handle to be selectively actuable between storage and usage conditions, whilst ensuring that the handle will be retained in the selected condition in the absence of a manually applied rotational force about the connector formation 28. However it will be appreciated that the connection between the handle and housing could take a variety of forms in order to achieve the desired function of holding a selected condition whilst allowing selective actuation of the handle between conditions. For example the connection between the handle and housing may comprise a latch or other releasable locking feature. In one example, the handle may be detachable from the housing connection formation and re-attachable in a different orientation to switch between storage and usage conditions. Furthermore the handle may be attachable only in a usage condition and may be removable and separately storable from the housing 12 when it is not needed. In such an example, a hook or similar holder may be used to store the handle, e.g. on the side of a toilet cistern or adjacent the toilet, when not in use.

Whilst ribs have been used to provide a cleaning formation in the above-described examples, it will be appreciated that a brush or bristles could be provided as the cleaning formation in other embodiments. Typically bristles could be provided in a lower portion of the enclosure to ensure they receive a flow of water from the enclosure when the toilet is flushed. Ribs and other open cleaning formations are in many ways preferred due to the reduced likelihood of material becoming trapped on/between cleaning formations. Accordingly such open cleaning formations are generally sanitary and easily cleaned. Other conventional cleaning formations could also be accommodated in different embodiments.

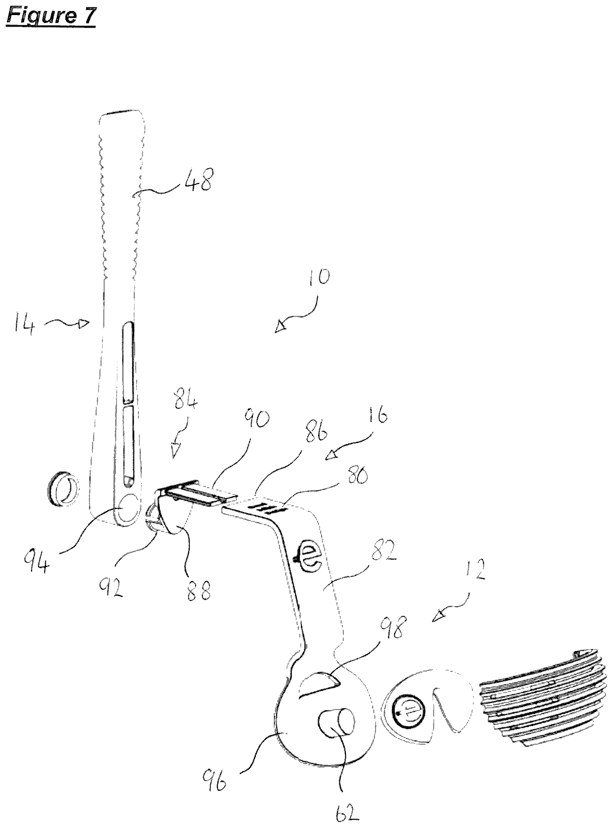

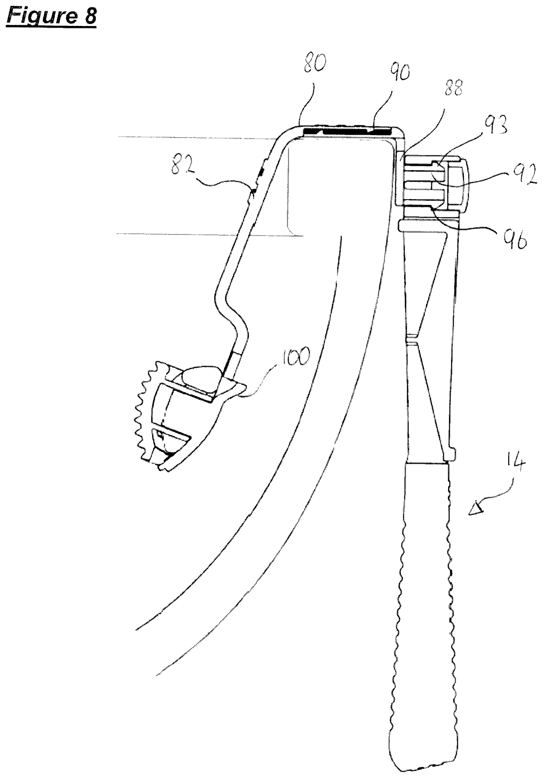

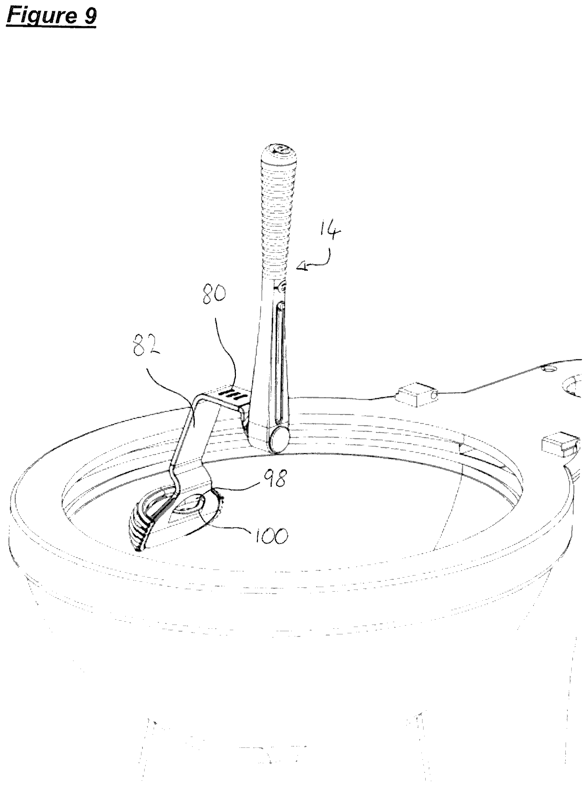

A third embodiment of the toilet sanitation aid 10 according to the present invention is shown in Figures 7, 8, and 9. The third embodiment differs from the first and second embodiments only in the form of the retaining formation 16, the handle retaining formation 92, and the receiving portion 96 of the housing 12.

Instead of comprising first 22, second 24, and third 26 integrally formed limbs, as in the first and second embodiments of the present invention, the retaining formation 16 of the third embodiment of the present invention comprises first 80 and second 82 integrally formed limbs, and an intermediate component 84

The first limb 80 is substantially planar in form, and is shaped so as to correspond substantially to an upper surface of a lip of a toilet bowl. The first limb 80 is substantially hollow in form, and a first end 86 of the first limb 80 is open. The interior of the first limb comprises a locking arrangement (not shown) for engaging a corresponding locking arrangement of the intermediate component 84.

The second limb 82 depends substantially downwardly from a second end of the first limb 80, in a region of a proximal end of the second limb 82. The second limb 82 is not disposed perpendicularly to the first limb 80, and is instead angled obliquely relative to the perpendicular axis. The second limb 82 is substantially planar in form, and is elongate such that it may extend substantially into a toilet bowl in a first usage condition.

The intermediate component 84 comprises third 88 and fourth 90 integrally formed limbs.

The third limb 88 comprises a wall portion for supporting formations 90, 92. The third limb 88 in this example is substantially triangular in form, yet has one substantially curved vertex. A handle retaining formation 92 extends laterally outwardly from a first surface of the third limb 88. The handle retaining formation 92 is substantially cylindrical in form, and takes the form of a male projection. The handle retaining formation 92 is dimensioned so as to engage a corresponding recess 94 of the handle portion 14. An outer surface of the handle retaining formation 92 has a lip 93 for engaging a corresponding engagement formation 96 within the recess 94 via a snap-fit or push-fit or other non-return connection. The handle retaining formation 92 is integrally formed with the third limb 88. The handle retaining formation 92 or recess 94 may comprise a latching formation such that the handle portion 14 can be selectively held at various orientations relative to the remainder of the toilet sanitation aid 10.

The third limb 88 is disposed substantially perpendicularly to the fourth limb 90, such that the third limb 88 depends substantially downwardly from a first end of the fourth limb 90. The fourth limb 90 is substantially planar in form, and is shaped and dimensioned so as to fit within the open first end 86 of the first limb 80. The fourth limb 90 comprises a locking arrangement for engaging with the corresponding locking arrangement of the first limb 80. The locking arrangements may be range-taking and may be used to vary the extent to which the fourth limb 90 is held within the first limb 80, and thus the retaining formation 16 may be adjustable to conform to toilet bowl rims of differing widths. Suitable locking arrangements may comprise a plurality of teeth, friction-fit portion, or the like.

The receiving portion 96 of the housing 12 performs a similar function to the receiving portions 30, 56 of the first and second embodiments, and differs primarily in its shape and the presence of an aperture 98. The global form of the receiving portion 96 is substantially oval in nature. The aperture 98 is substantially hemi-circular in form, and is located in an upper region of the receiving portion 96. The lower rim of the aperture 98 comprises a lip 100 for diverting water through the aperture 98 when the toilet sanitation aid 10 is in its first usage condition. The lip 100 may be particularly beneficial as it may ensure that water is diverted over the cleaning product held in the receiving portion 96 when the toilet sanitation aid 10 is in its first usage condition.

Any of the features of any or any combination of the retaining formation 16, handle retaining formation 92 and/or receiving portion 96 from the embodiment of Figures 7-9 may be applied to any other embodiment of the invention disclosed herein.

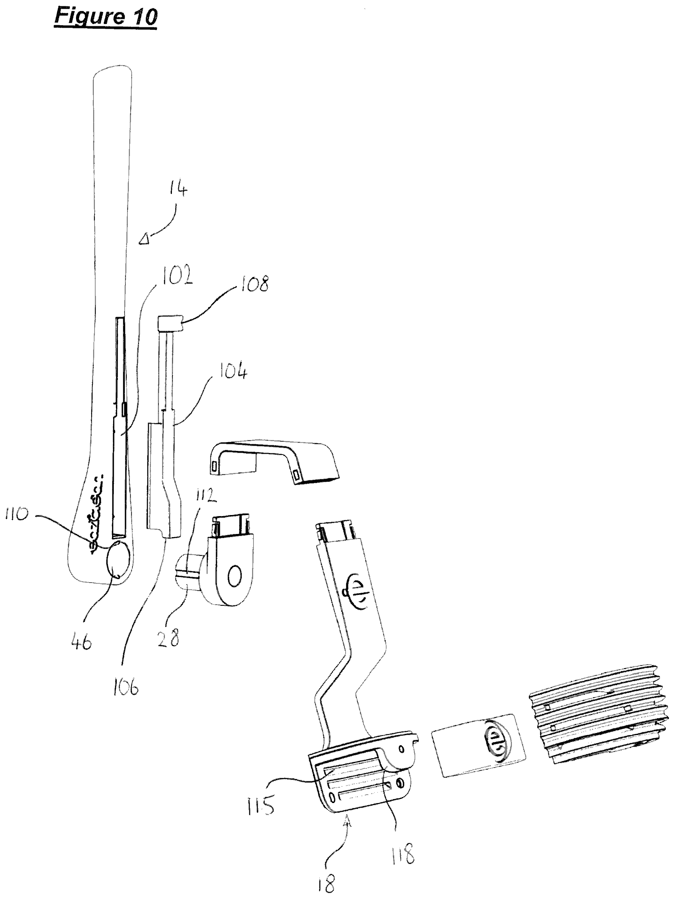

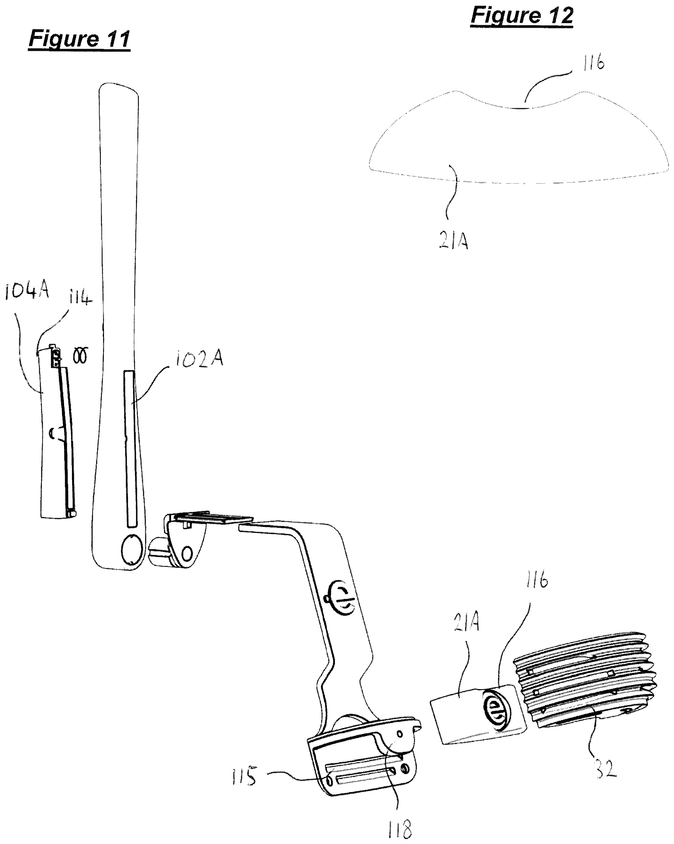

Further optional features of different embodiments of the invention are shown in Figures 10-12. A majority of the features shown in Figures 10 and 11 have been described above and so the following description discusses only the optional additional or alternative features to those of Figures 1-9. In Figures 10 and 11, a latch mechanism for releasably holding the handle in its second usage condition is shown.

The handle 14 in Figure 10 has an elongate recess 102 in which a moveable latch member 104 is located. The recess 102 terminates adjacent the circular recess 46 for receiving the handle retaining formation 28. The latch member has a projection, e.g. a notch, 106 at its end proximal the recess 46. In this example the latch member 104 is slidable along the recess 102.

When it is desired to use the sanitation aid 10 for manual cleaning, the latch member can be actuated such that the projection 106 engages a corresponding latch recess in the opposing side of the retaining formation 28, typically in a neck region thereof. This releasably locks the relative orientation of the handle 14 such that it extends away from the receiving portion 18 for a cleaning product. The sanitation aid can thus be used in the manner of a conventional toilet brush. When the sanitation aid is returned to being seated on the toilet bowl rim, the latch member 104 can be actuated away from the formation 28 and the handle can be pivoted into a condition in which it extends from the formation 28 towards the cleaning product receiving formation 18.

The latch member 104 may be biased, e.g. by a spring, towards the latched condition or else may be unbiased. The latch member 104 has a nub 108 or other similar raised formation, with which a user can actuate the latch member 104. He formation 104 is conveniently located at a distal end of the latch member 104 such that it can be actuated by a user whilst gripping the handle 14, e.g. at a location spaced from the handle retaining formation.

In the example of Figure 10, the thread formations on the retaining formation 28 and recess 46 can be avoided if desired. One or more notch 110 can be provided on either the formation 28 or recess 46 and a corresponding depression 112 can be provided on the other of the formation 28 and recess 46. The notch 110 and depression 112 are angularly aligned such that they become engaged when the handle 14 extends towards the cleaning product receiving formation 18. This stops the handle swinging loosely when not in use.

An alternative type of latch is shown in Figure 11 in which the latch member 104A pivots/rocks within the recess in the handle to engage and disengage an opposing recess in the handle receiving formation 28. A user may thus depress the distal end 114 of the latch member to release the latch 106 and permit rotation of the handle 104. The latch member 104A may be mounted to a pivot point within the elongate recess 102A and/or may be shaped to permit rocking when placed against a corresponding internal surface of the recess 102A. Angled or curved wall portions of either the latch member 104A or recess 102A may permit such a rocking action.

A latch of the kind shown in either of Figures 10 or 11 may be applied to any of the preceding examples of the invention shown in Figures 1-9.

A further optional feature of Figures 10 and 11, which may be applied to any other example of the invention, comprises the use of a plurality of apertures in the form of slots 115 in the rear wall of the cleaning product receiving formation 18 in order to promote the flow of water over the cleaning product during flushing of the toilet bowl. Each slot may have a lip formation to divert water onto the cleaning product akin to the lip 100 described above in relation to Figures 7-9.

Various different tablet forms of cleaning product may be envisaged for chemical cleaning. In the event that a solid, i.e. tablet, product is used, it will typically be shaped to correspond to the shape of the receiving formation 18. In this regard one of the cleaning product 21 and receiving formation 18 will typically comprise a projection and the other will typically comprise a corresponding recess shaped to receive the projection. This allows a mechanical fitment to ensure the cleaning product remains held in place. A further example of a suitable form of cleaning product 21A is shown in Figures 10- 12, which has a recess 116 on one side thereof to engage a protrusion 118 on the receiving formation 18. The protrusion 118 is thus similar to the retaining hub 62 described. However in this example, the protrusion 118 depends from the enclosure/cover 32, rather than the rear wall of the retaining formation 18.

In other examples of the invention, a gel or liquid cleaning product could be provided instead of the solid tablet-like cleaning product described above. A liquid cleaning product is provided in a housing, which may be replaced after all the liquid has been dispensed. A liquid cleaning product housing may take the form of any of the cleaning products disclosed herein.

## Claims

1. A toilet sanitation aid (10), the aid comprising a cleaning product (20), a housing (12) for the cleaning product and a handle connector portion (28), the housing comprising an enclosure (32) for the cleaning product, the housing adapted to be removably supported on a toilet bowl by an intermediate limb (22, 24, 26) between the handle connector portion and the housing, said limb being shaped to pass over a rim of a toilet bowl in a first usage condition (fig. 2, 6, 8) such that the cleaning product is held within a region of flow of water of a toilet bowl in the first usage condition and acts to chemically cleanse the toilet bowl,
wherein the housing comprises a cleaning formation, and the handle connector portion allows selective actuation of the housing for abrasive cleaning of the toilet bowl using the cleaning formation in a second usage condition (fig. 3), the enclosure of the housing having the shape of a dome or an hollow quadrant of an ellipsoid or an ovoid or an hollow portion of a substantially half cylinder with a curved outer surface and the cleaning formation comprising a plurality of upstanding ridges (42, 70) extending over the curved outer surface of the housing.

2. A toilet sanitation aid according to claim 1, wherein the cleaning formation is remote from the handle connector portion and disposed on an external surface of the housing.

3. A toilet sanitation aid according to any previous claim, wherein the plurality of upstanding ridges are elongate in form and extend in a direction across the surface of the housing.

4. A toilet sanitation aid according to claim 3, wherein the ridges are aligned substantially in parallel.

5. A toilet sanitation aid according to any preceding claim, wherein the enclosure comprises one or more aperture (40) to allow the cleaning product to be exposed to fluid flow in the toilet bowl in use.

6. A toilet sanitation aid according to claim 5, wherein the ridges are spaced by the apertures.

7. A toilet sanitation aid according to any preceding claim, wherein the cleaning formation is formed of a different material to the remainder of the housing, the cleaning formation having a higher coefficient of friction and/or lower hardness than a remainder of the housing.

8. A toilet sanitation aid according to any preceding claim, further comprising a handle (14) that is actuable relative to the housing.

9. A toilet sanitation aid according to claim 8, wherein the handle connector portion is arranged to resiliently hold an attached handle in the first and/or second usage condition but to allow selective release from said condition.

10. A toilet sanitation aid according to claim 8 or 9, wherein the handle or handle connector portion is pivotably or rotatably actuable relative to the housing.

11. A toilet sanitation aid according to claim 8, 9 or 10, comprising a latch (106) for selectively holding the handle in an orientation relative to the housing for the first and/or second usage condition.

12. A toilet sanitation aid according to any one of claims 8 to 11, wherein the handle is selectively mountable to the housing.

13. A toilet sanitation aid according to any preceding claim, wherein the limb is hook-like in form and shaped so as to substantially conform to the shape of a rim of a toilet bowl.

14. A toilet sanitation aid according to claim 13, wherein the limb comprises first (22), second (24) and third (26) integrally formed limb portions.

15. A toilet sanitation aid according to any preceding claim, wherein the cleaning product comprises a solid body having a mating formation shaped to fit with a corresponding mating formation in an interior of the housing.

## Patentansprüche

1. Toilettenhygiene-Hilfsmittel (10), wobei das Hilfsmittel ein Reinigungsprodukt (20), ein Gehäuse (12) für das Reinigungsprodukt und einen Griffverbinderabschnitt (28) umfasst, wobei das Gehäuse eine Umhüllung (32) für das Reinigungsprodukt umfasst, wobei das Gehäuse angepasst ist, um an einer Toilettenschüssel durch ein Zwischenglied (22, 24, 26) zwischen dem Griffverbinderabschnitt und dem Gehäuse abnehmbar abgestützt zu sein, wobei das Glied geformt ist, um in einem Zustand der ersten Verwendung (Fig. 2, 6, 8) über einen Rand einer Toilettenschüssel so zu verlaufen, dass das Reinigungsprodukt in einem Bereich des Wasserflusses einer Toilettenschüssel im ersten Verwendungszustand gehalten wird und zur chemischen Reinigung der Toilettenschüssel wirkt, wobei das Gehäuse ein Reinigungsgebilde umfasst und der Griffverbinderabschnitt eine selektive Betätigung des Gehäuses zur abrasiven Reinigung der Toilettenschüssel unter Verwendung des Reinigungsgebildes in einem zweiten Verwendungszustand (Fig. 3) ermöglicht, wobei die Umhüllung des Gehäuses die Form einer Kuppel oder eines hohlen Quadranten eines Ellipsoids oder einer Eiform oder eines hohlen Abschnitts eines im Wesentlichen halben Zylinders mit
einer gekrümmte Außenfläche aufweist und das Reinigungsgebilde
mehrere aufrechte Rippen (42, 70) umfasst,
die sich über die gekrümmte Außenfläche des Gehäuses erstrecken.

2. Toilettenhygiene-Hilfsmittel nach Anspruch 1, wobei sich das Reinigungsgebilde entfernt vom Griffverbinderabschnitt befindet und auf einer Außenfläche des Gehäuses angeordnet ist.

3. Toilettenhygiene-Hilfsmittel nach einem der vorhergehenden Ansprüche, wobei die mehreren aufrechten Rippen eine längliche Form haben und sich in einer Richtung über die Oberfläche des Gehäuses erstrecken.

4. Toilettenhygiene-Hilfsmittel nach Anspruch 3, wobei die Rippen im Wesentlichen parallel ausgerichtet sind.

5. Toilettenhygiene-Hilfsmittel nach einem der vorhergehenden Ansprüche, wobei die Umhüllung eine oder mehrere Öffnungen (40) umfasst, um zu ermöglichen, dass das Reinigungsprodukt einem Fluidstrom
in der Toilettenschüssel in Gebrauch ausgesetzt ist.

6. Toilettenhygiene-Hilfsmittel nach Anspruch 5, wobei die Rippen durch die Öffnungen beabstandet sind.

7. Toilettenhygiene-Hilfsmittel nach einem der vorhergehenden Ansprüche, wobei das Reinigungsgebilde aus einem anderen Material als der Rest des Gehäuses gebildet ist, wobei das Reinigungsgebilde einen höheren Reibungskoeffizienten und/oder eine geringere Härte als ein Rest des Gehäuses aufweist.

8. Toilettenhygiene-Hilfsmittel nach einem der vorhergehenden Ansprüche, ferner umfassend einen Griff (14), der relativ zum Gehäuse betätigbar ist.

9. Toilettenhygiene-Hilfsmittel nach Anspruch 8, wobei der Griffverbinderabschnitt angeordnet ist, um einen angebrachten Griff im ersten und/oder zweiten Verwendungszustand elastisch zu halten, aber eine selektive Freigabe von dem Zustand zu ermöglichen.

10. Toilettenhygiene-Hilfsmittel nach Anspruch 8 oder 9, wobei der Griff oder Griffverbinderabschnitt relativ zum Gehäuse schwenkbar oder drehbar betätigbar ist.

11. Toilettenhygiene-Hilfsmittel nach Anspruch 8, 9 oder 10, umfassend eine Klinke (106), um
den Griff in einer Ausrichtung relativ zum Gehäuse selektiv für den ersten und/oder zweiten Verwendungszustand zu halten.

12. Toilettenhygiene-Hilfsmittel nach einem der Ansprüche 8 bis 11, wobei der Griff selektiv am Gehäuse montierbar ist.

13. Toilettenhygiene-Hilfsmittel nach einem der vorhergehenden Ansprüche, wobei das Glied eine hakenartige Form hat und geformt ist, um im Wesentlichen der Form eines Randes einer Toilettenschüssel zu entsprechen.

14. Toilettenhygiene-Hilfsmittel nach Anspruch 13, wobei das Glied einen ersten (22), zweiten (24) und dritten (26) Gliedabschnitt umfasst, die einstückig ausgebildet sind.

15. Toilettenhygiene-Hilfsmittel nach einem der vorhergehenden Ansprüche, wobei das Reinigungsprodukt einen festen Körper umfasst, der ein Passungsgebilde aufweist, das geformt ist, um zu einem entsprechenden Passungsgebilde in einem Inneren des Gehäuses zu passen.

## Revendications

1. Dispositif sanitaire pour WC (10), le dispositif comprenant un produit nettoyant (20), un boîtier (12) pour le produit nettoyant, et une partie de connecteur de poignée (28), le boîtier comprenant une enceinte (32) pour le produit nettoyant, le boîtier étant adapté pour être supporté de façon amovible sur la cuvette de WC par un membre intermédiaire (22, 24, 26) entre la partie de connecteur de poignée et le boîtier, ledit membre étant façonné de façon à passer au-dessus du rebord d'une cuvette de WC dans un premier mode d'utilisation (fig. 2, 6, 8), de sorte que le produit nettoyant soit maintenu dans une zone de débit d'eau d'une cuvette de WC dans le premier mode d'utilisation, et intervienne pour effectuer un nettoyage chimique de la cuvette de WC, le boîtier comprenant une formation de nettoyage, et la partie de connecteur de poignée permettant un actionnement sélectif du boîtier pour le nettoyage abrasif de la cuvette de WC en utilisant la formation de nettoyage dans un deuxième mode d'utilisation (fig. 3), l'enceinte du boîtier ayant la forme d'un dôme ou d'un quadrant creux d'un ellipsoïde ou d'un ovoïde, ou une partie creuse d'un agencement globalement semi-cylindrique avec une surface extérieure recourbée, et la formation de nettoyage comprenant une pluralité de nervures verticales (42, 70) s'étendant au-dessus de la surface extérieure recourbée du boîtier.

2. Dispositif sanitaire pour WC selon la revendication 1, la formation de nettoyage se trouvant à distance de la partie de connecteur de poignée, et étant disposée sur une surface externe du boîtier.

3. Dispositif sanitaire pour WC selon une quelconque des revendications précédentes, la pluralité de nervures verticales ayant une forme allongée, et s'étendant dans une direction à travers la surface du boîtier.

4. Dispositif sanitaire pour WC selon la revendication 3, les nervures étant alignées de façon globalement parallèle.

5. Dispositif sanitaire pour WC selon une quelconque des revendications précédentes, l'enceinte comprenant une ou plusieurs ouvertures (40) permettant l'exposition du produit nettoyant à un débit de fluide dans la cuvette des WC en cours d'usage.

6. Dispositif sanitaire pour WC selon la revendication 5, les nervures étant espacées par les ouvertures.

7. Dispositif sanitaire pour WC selon une quelconque des revendications précédentes, la formation de nettoyage étant réalisée avec un matériau différent de celui du restant du boîtier, la formation de nettoyage présentant un coefficient de frottement supérieur et/ou une dureté inférieure à ceux d'un restant du boîtier.

8. Dispositif sanitaire pour WC selon une quelconque des revendications précédentes, comprenant en outre une poignée (14) pouvant être actionnée relativement au boîtier.

9. Dispositif sanitaire pour WC selon la revendication 8, la partie de connecteur de poignée étant agencée de façon à maintenir de façon élastique une poignée fixée dans le premier et/ou le deuxième mode d'utilisation, tout en permettant le relâchement sélectif dudit mode.

10. Dispositif sanitaire pour WC selon la revendication 8 ou 9, la poignée ou la partie de connecteur de poignée pouvant être actionnée de façon pivotante ou rotative relativement au boîtier.

11. Dispositif sanitaire pour WC selon la revendication 8, 9 ou 10, comprenant un verrou (106) pour fixer de façon sélective la poignée dans une orientation relativement au boîtier pour le premier et/ou le deuxième mode d'utilisation.

12. Dispositif sanitaire pour WC selon une quelconque des revendications 8 à 11, la poignée pouvant être montée de façon sélective sur le boîtier.

13. Dispositif sanitaire pour WC selon une quelconque des revendications précédentes, le membre ayant la forme d'un crochet, et étant façonné de façon à se conformer globalement à la forme d'un rebord d'une cuvette de WC.

14. Dispositif sanitaire pour WC selon la revendication 13, le membre comprenant une première (22), une deuxième (24) et une troisième (26) parties de membre solidaires.

15. Dispositif sanitaire pour WC selon une quelconque des revendications précédentes, le produit nettoyant comprenant un corps plein à formation d'accouplement façonnée de façon à correspondre à une formation d'accouplement correspondante dans un intérieur du boîtier.
